# EUROPÄISCHE PATENTSCHRIFT

(11) **EP 2 480 780 B1**
(45) Veröffentlichungstag und Bekanntmachung des Hinweises auf die Patenterteilung: **09.04.2014**
(21) Anmeldenummer: 10740211.7
(22) Anmeldetag: 03.08.2010
(51) Int. Cl.: F02M 25/07

(54) **BRENNKRAFTMASCHINE**
INTERNAL COMBUSTION ENGINE
MOTEUR À COMBUSTION INTERNE

(30) Priorität: 23.09.2009 DE 102009044913
(43) Veröffentlichungstag der Anmeldung: 01.08.2012
(73) Patentinhaber: Robert Bosch GmbH, 70442 Stuttgart (DE)
(72) Erfinder: STEGMAIER, Juergen, 71638 Ludwigsburg (DE); CICHON, Martin, 70499 Stuttgart (DE); SCHMITT, Manfred, 64646 Heppenheim (DE); BANZHAF, Bernd, 70563 Stuttgart (DE); SCHMIDT, Achim, 71706 Markgroeningen (DE)
(86) Internationale Anmeldenummer: PCT/EP2010/061255
(87) Internationale Veröffentlichungsnummer: WO 2011/035967

(56) Entgegenhaltungen:
- EP-A1- 0 740 065
- EP-A2- 0 889 226
- WO-A1-01/50010
- WO-A1-98/32964
- WO-A1-98/35153
- US-A- 6 041 602
- US-B1- 6 412 278

## Beschreibung

Die Erfindung betrifft eine Brennkraftmaschine mit einer Abgasrückführungsvorrichtung zur Rückführung von Abgas der Brennkraftmaschine auf eine Frischluftseite der Brennkraftmaschine.

### Stand der Technik

Brennkraftmaschinen der eingangs genannten Art sind aus dem Stand der Technik bekannt. Bei der Entwicklung von Brennkraftmaschinen spielt die Reduzierung von bei der Verbrennung in der Brennkraftmaschine entstehenden Schadstoffen eine immer größere Rolle. Zum einen können geeignete Abgasreinigungs- beziehungsweise Abgasnachbehandlungseinrichtungen, beispielsweise Katalysatoren, vorgesehen werden, um die entstandenen Schadstoffe nach deren Ausstoß aus der Brennkraftmaschine aus dem Abgas herauszufiltern beziehungsweise in ungefährlichere Produkte umzuwandeln. Zum anderen ist es jedoch das Ziel, bereits die Entstehung der Schadstoffe zu verhindern.

Eine Möglichkeit dies zu erreichen, ist es, eine Abgasrückführung vorzusehen. Bei einer solchen wird das bei der Verbrennung entstandene Abgas der Brennkraftmaschine nicht unmittelbar abgeführt und in eine Umgebung entlassen, sondern erneut der Brennkraftmaschine - zusammen mit Frischluft und Brennstoff - zugeführt. Zu diesem Zweck wird das Abgas auf die Frischluftseite der Brennkraftmaschine zurückgeführt. Auf diese Weise kann die Menge des in dem Abgas enthaltenen Stickoxids verringert werden. Durch die Abgasrückführung wird zunächst die in der Brennkraftmaschine vorliegende Verbrennungstemperatur gesenkt. Dies liegt daran, dass das Abgas zwar nicht an der Verbrennung selbst teilnimmt, aber dennoch während der Verbrennung aufgeheizt werden muss. Eine solche Absenkung der Verbrennungstemperatur hat eine Verringerung des Stickoxid (NOₓ)-Anteils zur Folge. Ebenso bewirkt die Abgasrückführung einen verringerten Sauerstoffanteil während der Verbrennung. Stickoxide entstehen jedoch bevorzugt bei Luftüberschuss, so dass die Menge der Stickoxide weiter verringert wird. Dabei ist jedoch zu beachten, dass während der Verbrennung nicht zu wenig Sauerstoff vorhanden sein darf, weil sich ansonsten Kohlenwasserstoffe (HC) bilden können, was ebenfalls unerwünscht ist.

Der Effekt der Abgasrückführung kann weiter verbessert werden, indem das zurückgeführte Abgas gekühlt wird. Dazu beschreibt beispielsweise die DE 10 2006 055 814 A1 einen Verbrennungsmotor, der einen Turbolader (Aufladeeinrichtung) aufweist, wobei Abgase des Verbrennungsmotors aus einem Abgasstrang entnommen und in seine Frischluftleitung eingespeist werden, sodass die Frischluft mit den darin vermischten Abgasen in einem Verdichterteil des Turboladers verdichtet werden und einer einlassseitigen Saugleitung zugeführt werden. In der Saugleitung ist ein Kühlelement integriert und so ausgelegt, dass eventuell entstehendes Kondensat nur in Richtung von Einlassventilen des Verbrennungsmotors laufen kann, und so die mit den Abgasen vermischte Frischluft innerhalb der Saugleitung gekühlt wird, wobei die Saugleitung in einen Luftverteiler mündet. Somit wird das Abgas auf das niedrige Druckniveau vor einer Verdichterturbine zurückgeführt, um eine größere Abgasmenge auf die Frischluftseite des Verbrennungsmotors bringen zu können und nachfolgend die Temperatur des Abgases - zusammen mit derjenigen der Frischluft - gesenkt.

Eine weitere Möglichkeit, eine größere Menge Abgas auf die Frischluftseite der Brennkraftmaschine zurückzuführen ist es, auf der Frischluftseite beziehungsweise in einer Frischluftzufuhr eine Drosselklappe vorzusehen, um den dort vorliegenden Druck, insbesondere einen Saugrohrdruck, temporär abzusenken. Weist die Brennkraftmaschine eine Aufladeeinrichtung auf, so muss das zurückgeführte Abgas zusammen mit der Frischluft komprimiert werden. Das bedeutet, dass die Laderleistung deutlich erhöht werden muss, weil der zusätzliche Abgasmassenstrom zu berücksichtigen ist. Dies gilt ebenso bei der Verwendung der Drosselklappe, da die Aufladeeinrichtung nun die Drosselverluste kompensieren muss. Damit erhöht sich aber auch der Kraftstoffverbrauch, unter anderem weil die Ansaugarbeit bedingt durch den verringerten der Brennkraftmaschine zur Verfügung stehenden Druck ansteigt.

Eine Brennkraftmaschine mit einer Abgasrückführeinrichtung gemäß dem Oberbegriff des Anspruchs 1 ist aus der WO 01/50010 A1 bekannt.

### Offenbarung der Erfindung

Die Brennkraftmaschine mit den in Anspruch 1 genannten Merkmalen weist dagegen den Vorteil auf, dass Abgas auf die Frischluftseite der Brennkraftmaschine zurückgeführt werden kann, ohne den Kraftstoffverbrauch der Brennkraftmaschine und/oder - falls eine Aufladeeinrichtung vorgesehen ist - die erforderliche Laderleistung erhöhen zu müssen. Dies wird erreicht, indem die Abgasrückführungsvorrichtung mindestens einen Verdichter zur Komprimierung des der Frischluftseite der Brennkraftmaschine zugeführten Abgases aufweist. Der Verdichter dient zur Komprimierung, also zur Druckerhöhung, des Abgases. Dabei ist der Verdichter der Abgasrückführungsvorrichtung zugeordnet, er verdichtet also das Abgas, bevor es auf die Frischluftseite der Brennkraftmaschine gelangt und sich dort mit der Frischluft, welche der Brennkraftmaschine zugeführt wird, vermengt. Der Verdichter ist unmittelbar in einer Abgasrückführungsleitung, in welchem ausschließlich das zurückgeführte Abgas vorliegt, angeordnet. Die Abgasrückführungsvorrichtung ist somit eine von der Frischluftseite getrennt vorliegende Einheit. Der Verdichter ist folglich nicht der Verdichter einer möglicherweise vorgesehenen Aufladeeinrichtung der Brennkraftmaschine. Das zurückgeführte Abgas wird vielmehr komprimiert, bevor es auf die Frischluftseite gelangt, also vor einer Zusammenführung mit der Frischluft. Der Verdichter der Abgasrückführungsvorrichtung ermöglicht es, das Abgas auch stromabwärts eines Verdichters der Aufladevorrichtung der Frischluftseite zuzuführen, da sich das Abgas bereits auf einem ausreichend hohen Druckniveau befindet. Mithilfe des Verdichters wird der Druck des Abgases erhöht, womit eine größere Menge des Abgases auf die Frischluftseite gebracht und somit der Brennkraftmaschine erneut zugeführt werden kann.

Die Erfindung sieht zum Betrieb des Verdichters dem Abgas entnommene thermische Energie vor. Dies ermöglicht einen besonders energieeffizienten Betrieb des Verdichters. Die thermische Energie liegt in dem Abgas ohnehin vor, und würde, wenn sie nicht zum Betreiben des Verdichters verwendet wird, ungenutzt in eine Umgebung der Brennkraftmaschine entlassen werden. Somit kann die Menge des zurückgeführten Abgases erhöht werden, ohne den Kraftstoffverbrauch der Brennkraftmaschine zu erhöhen oder eine höhere Leistung der Aufladeeinrichtung vorsehen zu müssen. Zum Entnehmen der thermischen Energie aus dem Abgas kann ein Dampfkreis vorgesehen sein.

Die Erfindung sieht vor, dass zur Entnahme der thermischen Energie ein Wärmetauscher vorgesehen ist. Der Wärmetauscher ist somit beispielsweise Bestandteil eines Abgastrakts der Brennkraftmaschine. Der Wärmetauscher ist dem Abgastrakt zugeordnet und vorzugsweise nachfolgend der eventuell vorhandenen Aufladeeinrichtung und/oder Abgasreinigungseinrichtung angeordnet. In Abhängigkeit des Energiebedarfs des Verdichters kann jedoch der Wärmetauscher auch an einer Stelle des Abgastrakts angeordnet sein, an welchem eine höhere Temperatur des Abgases vorliegt, also vor der Aufladeeinrichtung und/oder den Abgasreinigungseinrichtungen.

Eine Weiterbildung der Erfindung sieht vor, dass der Wärmetauscher an einen Dampferzeuger zur Verdampfung eines Fluids angeschlossen und der erzeugte Dampf einer mit dem Verdichter wirkverbundenen Turbine zugeführt ist. Mittels des Wärmetauschers wird also dem Abgas die thermische Energie entnommen, die anschließend in dem Dampferzeuger verwendet wird, um das Fluid, beispielsweise Wasser, zu verdampfen und damit Dampf zu erzeugen. Dieser Dampf wird über eine Turbine geleitet, wobei die in dem Dampf vorhandene Energie in mechanische Energie umgesetzt wird. Die Turbine ist dabei beispielsweise über eine gemeinsame Welle mit dem Verdichter wirkverbunden, dient also dessen Antrieb.

Eine Weiterbildung der Erfindung sieht vor, dass der Verdichter stromabwärts oder stromaufwärts mindestens eines Abgaskühlers angeordnet ist. Der Abgaskühler dient dem Kühlen des Abgases, entweder vor dem Verdichter oder nachfolgend des Verdichters. Das Kühlen des Abgases erhöht die Wirkung der Abgasrückführungseinrichtung, da auf diese Weise die Verbrennungstemperatur in der Brennkraftmaschine weiter gesenkt werden kann. Der Verdichter ist bevorzugt stromabwärts des Abgaskühlers angeordnet, weil hierdurch die thermische Belastung des Verdichters verringert wird und die erforderliche Verdichterleistung durch die höhere Dichte des kühleren Abgases geringer ist. Grundsätzlich kann der Verdichter aber auch vor dem Abgaskühler angeordnet werden, weil durch die höhere Temperatur des verdichteten Abgases die Wärmeübertragung innerhalb des Abgaskühlers verbessert wird und dieser damit kleiner ausgelegt werden kann.

Eine Weiterbildung der Erfindung sieht vor, dass der Wärmetauscher den Abgaskühler zumindest teilweise bildet oder dass der Abgaskühler ein weiterer, an den Dampferzeuger angeschlossener Wärmetauscher ist. Der Wärmetauscher zur Entnahme der thermischen Energie aus dem Abgas kann dazu eingesetzt werden, das Abgas beziehungsweise das zurückgeführte Abgas zu kühlen. Zu diesem Zweck bildet der Wärmetauscher zumindest teilweise den Abgaskühler. Es können jedoch ebenso mehrere Wärmetauscher vorgesehen sein, von welchen lediglich mindestens einer als Abgaskühler eingesetzt ist. Der Wärmetauscher ist dann beispielsweise ein weiterer Wärmetauscher, der an den Dampferzeuger angeschlossen ist. Es können auch ein Niedertemperaturwärmetauscher und ein Hochtemperaturwärmetauscher vorgesehen sein, die nacheinander geschaltet sind, um den Dampferzeuger zu betreiben. Sind mehrere Wärmetauscher vorgesehen, so können durchaus auch mehrere Dampferzeuger vorgesehen sein, die beispielsweise ebenfalls hintereinander geschaltet sind.

Eine Weiterbildung der Erfindung sieht eine mindestens einstufige Aufladeeinrichtung, insbesondere einen Abgasturbolader, vor. Die Aufladeeinrichtung ist der Frischluftseite der Brennkraftmaschine zugeordnet und dient dazu, der Brennkraftmaschine zugeführte Frischluft zu komprimieren und damit ihren Druck zu erhöhen. Die Aufladeeinrichtung wird insbesondere zur verbesserten Frischluftfüllung von Brennräumen beziehungsweise Zylindern der Brennkraftmaschine verwendet. Die Aufladeeinrichtung ist vorteilhafterweise als Abgasturbolader ausgebildet, wird also mit Abgas der Brennkraftmaschine betrieben. Dazu strömt das Abgas über eine Abgasturbine des Abgasturboladers und treibt damit einen Verdichter des Abgasturboladers zur Druckerhöhung der Frischluft an.

Eine Weiterbildung der Erfindung sieht vor, dass ein Abgasentnahmeanschluss zur Entnahme des der Brennkraftmaschine zugeführten Abgases stromaufwärts oder stromabwärts des Abgasturboladers angeordnet ist. Das Abgas kann also dem Abgastrakt der Brennkraftmaschine entnommen werden, bevor es den Abgasturbolader durchströmt oder erst nachfolgend. Bevorzugt ist eine Anordnung des Abgasentnahmeanschlusses stromaufwärts des Abgasturboladers. Das Abgas weist an diesem Punkt noch ein vergleichsweise hohes Druckniveau auf, wodurch für die Komprimierung des Abgases in der Abgasrückführeinrichtung eine vergleichsweise geringe Leistung benötigt wird. Zusätzlich ist die Temperatur des Abgases höher als nach dem Abgasturbolader, sodass ein an dieser Stelle angeordneter Wärmetauscher optimal zur Dampferzeugung eingesetzt werden kann. Auf diese Weise kann beispielsweise eine Überhitzung des Dampfes vorgenommen werden. Alternativ kann jedoch der Abgasentnahmeanschluss stromabwärts des Abgasturboladers angeordnet werden. Der Vorteil hiervon ist, dass die Leistung des Abgasturboladers nicht durch die Entnahme von Abgas verringert wird.

Eine Weiterbildung der Erfindung sieht vor, dass bei einem mehrstufigen Abgasturbolader der Abgasentnahmeanschluss zwischen den Stufen vorgesehen ist. Der Abgasturbolader weist in diesem Fall beispielsweise einen Hochdruckteil, bestehend aus Hochdruckturbine und Hochdruckverdichter, sowie einen Niederdruckteil, bestehend aus Niederdruckturbine und Niederdruckverdichter, auf. Das Abgas strömt dabei zunächst über die Hochdruckturbine und anschließend über die Niederdruckturbine. Der Abgasentnahmeanschluss ist nun zwischen den Stufen, also stromabwärts der Hochdruckturbine und stromaufwärts der Niederdruckturbine, angeordnet.

Eine Weiterbildung der Erfindung sieht vor, dass stromabwärts der Turbine der Abgasrückführungsvorrichtung ein Kondensator und/oder eine Fluidfördereinrichtung vorgesehen ist. Mittels der Turbine wird der Verdichter der Abgasrückführungsvorrichtung angetrieben, insbesondere durch Überströmen der Turbine mit dem mittels des Dampferzeugers erzeugten Dampfes. Die Turbine ist damit Bestandteil eines Dampfkreises. In diesem ist ebenfalls der Kondensator und/oder die Fluidfördereinrichtung vorgesehen. Der Kondensator dient stromabwärts der Turbine dazu, den Dampf zu kondensieren, sodass nachfolgend des Kondensators wiederum das Fluid vorliegt. Mittels der Fluidfördereinrichtung, welche üblicherweise stromabwärts des Kondensators vorgesehen ist, wird das Fluid wieder dem Dampferzeuger zugeführt. Somit liegt ein geschlossener Fluid- beziehungsweise Dampfkreislauf vor, mittels welchem der Verdichter der Abgasrückführungsvorrichtung betreibbar ist.

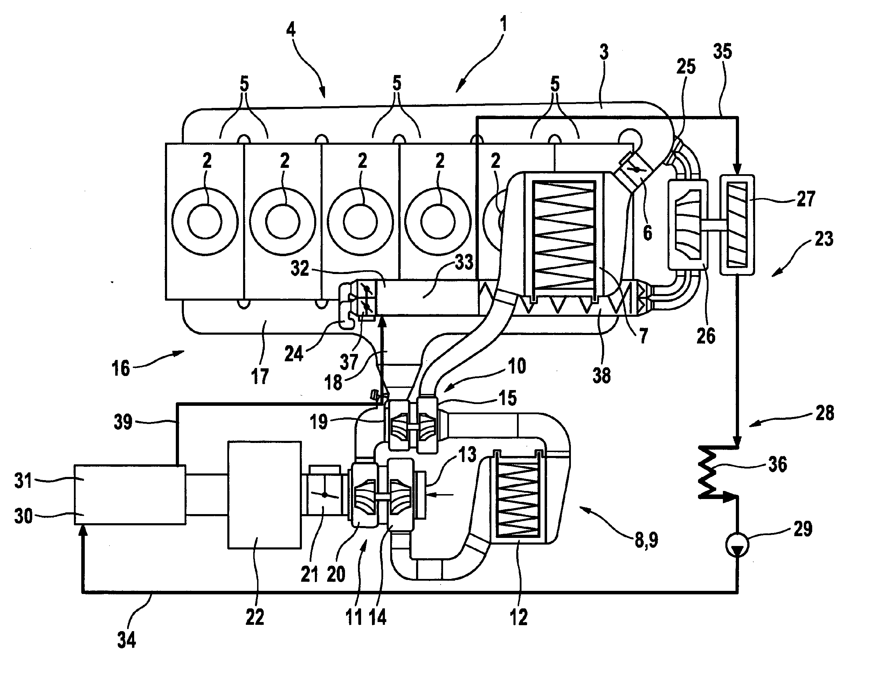

Die Erfindung wird im Folgenden anhand der in der Zeichnung dargestellten Ausführungsbeispiele näher erläutert, ohne dass eine Beschränkung der Erfindung erfolgt. Es zeigt die einzige
- Figur: eine schematische Darstellung einer Brennkraftmaschine.

Die Figur zeigt eine Brennkraftmaschine 1 mit mindestens einem Zylinder 2, welchem über eine Luftzuführeinrichtung 3 Luft zur Durchführung einer Verbrennung zugeführt werden kann. Die Luftzuführeinrichtung 3 ist dabei auf einer Frischluftseite 4 der Brennkraftmaschine 1 vorgesehen. Die Luftzuführeinrichtung 3 weist außer Luftzuführstutzen 5, über welche den Zylindern 2 die Luft zugeführt wird, eine Drosselklappe 6, einen Ladeluftkühler 7 und eine Aufladeeinrichtung 8 auf. Die Aufladeeinrichtung 8 ist ein Abgasturbolader 9 mit einem Hochdruckteil 10, einem Niederdruckteil 11 und einem dazwischen angeordneten Zwischenkühler 12.

Während eines Betriebs der Brennkraftmaschine 1 wird Luft durch einen Lufteinlass 13 angesaugt und von einem Niederdruckverdichter 14 des Niederdruckteils 11 verdichtet. Durch das Verdichten liegt die Luft bei einem höheren Druck und einer höheren Temperatur vor. Die Temperatur wird nachfolgend des Niederdruckverdichters 14 mittels des Zwischenkühlers 12 abgesenkt, bevor die Luft anschließend mittels eines Hochdruckverdichters 15 des Hochdruckteils 10 weiter verdichtet wird. Nachfolgend des Hochdruckverdichters 15 wird die Luft wiederum abgekühlt, diesmal mit Hilfe des Ladeluftkühlers 7. Über die Drosselklappe 6 kann die Luft zu den Luftzuführstutzen 5 und damit über nicht dargestellte Einlassventile in die Zylinder 2 gelangen. Die Drosselklappe 6 dient dabei dem Einstellen der Luftmenge, welche in die Zylinder 2 gelangen soll.

Nach der Verbrennung in der Brennkraftmaschine 1 wird das dabei entstehende Abgas in einen Abgastrakt 16 entlassen. Dieser weist zunächst einen Abgaskrümmer 17 und eine Abgassammelleitung 18 auf, welche an die Zylinder 2 beziehungsweise diesen zugeordnete Auslassventile angeschlossen sind. Mittels des Abgaskrümmers 17 beziehungsweise der Abgassammelleitung 18 wird das Abgas der Zylinder 2 zusammengeführt. Nachfolgend gelangt es zu dem Abgasturbolader 9. Dort durchläuft es zunächst eine Hochdruckturbine 19 des Hochdruckteils 10 und anschließend eine Niederdruckturbine 20 des Niederdruckteils 11. Der Abgasturbolader 9 ist also zweistufig. Die Hochdruckturbine 19 treibt den Hochdruckverdichter 15 und die Niederdruckturbine 20 den Niederdruckverdichter 14 an. Nachfolgend der Niederdruckturbine 20 gelangt das Abgas über eine Drosselklappe 21 in eine Abgasnachbehandlungs- beziehungsweise Abgasreinigungseinrichtung 22, welche mindestens einen Katalysator und/oder einen Filter aufweisen kann.

Zusätzlich weist die Brennkraftmaschine 1 eine Abgasrückführungsvorrichtung 23 auf. Dabei ist mindestens ein Abgasentnahmeanschluss 24 vorgesehen, um Abgas aus dem Abgaskrümmer 17 oder der Abgassammelleitung 18 zu entnehmen und durch mindestens einen Abgaszuführanschluss 25 auf die Frischluftseite 4 der Brennkraftmaschine 1 zu bringen. In dem dargestellten Beispiel befindet sich der Abgaszuführanschluss 25 stromabwärts der Drosselklappe 6, sodass, falls notwendig, der Druck der Frischluft mittels der Drosselklappe 6 kurzfristig reduziert werden kann, um das Zuführen des Abgases durch den Abgaszuführanschluss 25 zu ermöglichen. Ein solches Vorgehen reduziert üblicherweise die Leistungsfähigkeit der Brennkraftmaschine 1. Aus diesem Grund ist es vorgesehen, den Druck des Abgases mittels eines Verdichters 26 zu erhöhen, sodass das Abgas auf die Frischluftseite 4 gebracht werden kann, ohne dass einschließende Drosselklappe 6 notwendig wäre.

Der Verdichter 26 wird von einer Turbine 27 angetrieben, welche in einem Dampfkreislauf 28 der Abgasrückführungsvorrichtung 23 vorgesehen ist. Der Dampfkreislauf 28 weist eine Fluidfördereinrichtung 29, insbesondere eine Pumpe, einen ersten Wärmetauscher 30 mit einem ersten Dampferzeuger 31 sowie einen zweiten Wärmetauscher 32 mit einem zweiten Dampferzeuger 33 auf. Mittels den Wärmetauschern 30 und 32 wird dem Abgas der Brennkraftmaschine 1 thermische Energie entnommen und mit dieser mittels der Dampferzeuger 31 und 33 ein in einer Fluidleitung 34 enthaltenes Fluid verdampft und der dabei entstehende Dampf über eine Dampfleitung 35 der Turbine 27 zugeführt. Stromabwärts der Turbine 27 ist ein Kondensator 36 angeordnet, welcher noch verbliebenen Dampf kondensiert, sodass nachfolgend des Kondensators 36 wieder Fluid vorliegt, welches mittels der Fluidfördereinrichtung 29 erneut gefördert wird. Stromabwärts des Abgasentnahmeanschlusses 24, jedoch stromaufwärts des zweiten Wärmetauschers 32 ist mindestens ein Drosselventil 37 vorgesehen, mit welchem die Menge des Abgases eingestellt werden kann, welche der Frischluftseite 4 der Brennkraftmaschine 1 zugeführt wird.

Der zweite Wärmetauscher 32 bildet einen Abgaskühler 38 zumindest bereichsweise aus. Der Abgaskühler 38 dient dazu, das Abgas nachfolgend seiner Entnahme durch den Abgasentnahmeanschluss 24 abzukühlen, bevor es durch den Abgaszuführanschluss 24 auf die Frischluftseite 4 der Brennkraftmaschine 1 gelangt. Der Abgaskühler 38 ist dabei stromaufwärts des Verdichters 26 vorgesehen. Der zweite Wärmetauscher 32 ist, wie vorstehend ausgeführt, stromabwärts des Drosselventils 37, also unmittelbar stromabwärts des Abgasentnahmeanschlusses 24 vorgesehen. An diesem Punkt weist das Abgas, welches gerade aus den Zylindern 2 ausgestoßen wurde, eine hohe Temperatur auf, sodass der zweite Wärmetauscher 32 auch als Überhitzer bezeichnet werden kann. Der erste Wärmetauscher 30 ist dagegen in dem Abgastrakt 16 nachfolgend der Abgasreinigungseinrichtung 22 vorgesehen, also unmittelbar, bevor das Abgas aus der Brennkraftmaschine 1 in eine Umgebung entlassen wird.

Auf diese Weise kann noch in dem Abgas enthaltene thermische Energie verwendet werden, um das in der Fluidleitung 34 geförderte Fluid mittels des ersten Dampferzeugers 31, welcher mit dem ersten Wärmetauscher 30 in Wirkverbindung steht, zu verdampfen, womit vorzugsweise Sattdampf vorliegt. Dieser Sattdampf wird anschließend über eine Sattdampfleitung 39 dem zweiten Dampferzeuger 33 zugeführt, welcher mit dem zweiten Wärmetauscher 32 in Wirkverbindung steht. Damit liegt in dem zweiten Dampferzeuger 33 eine höhere Temperatur vor als in dem ersten Dampferzeuger 31. Der über die Sattdampfleitung 39 herangeführte Sattdampf kann somit in dem zweiten Dampferzeuger 33 überhitzt werden, sodass nachfolgend Heißdampf vorliegt, welcher über die Dampfleitung 35 der Turbine 27 zugeführt wird. Auf diese Weise wird die in dem Abgas enthaltene thermische Energie zum Betreiben des Verdichters 26 genutzt. Mit diesem wird das Abgas, welches auf die Frischluftseite 4 der Brennkraftmaschine 1 zurückgeführt werden soll, auf einen höheren Druck gebracht, also komprimiert. Somit kann eine größere Menge Abgas auf die Frischluftseite 4 gebracht werden, als ohne die Druckerhöhung, womit die Menge der bei der Verbrennung in den Zylindern 2 entstehenden Stickoxide verringert werden kann. Dabei ist es nicht notwendig, den Druck auf der Frischluftseite 4 mittels der Drosselklappe 6 zu senken, um das Abgas durch den Abgaszuführanschluss 25 zuzuführen, da das Abgas einen ausreichend hohen Druck aufweist.

Weil die thermische Energie, die zum Betreiben des Verdichters 26 genutzt wird, hauptsächlich nachfolgend der Abgasreinigungseinrichtung 22 entnommen wird, ansonsten mit dem Abgas in die Umgebung entlassen würde, kann auf diese Weise ohne wesentlichen zusätzlichen Energieeinsatz die Effizienz der Verbrennung in der Brennkraftmaschine 1 deutlich erhöht werden. Dabei ist die Anordnung des Abgasentnahmeanschlusses 24 in der Figur rein beispielhaft dargestellt.

Alternativ wäre es auch möglich, das Abgas zwischen der Hochdruckturbine 19 und der Niederdruckturbine 20 oder stromabwärts der Niederdruckturbine 20 zu entnehmen. Eine Entnahme aus dem Abgaskrümmer 17 beziehungsweise der Abgassammelleitung 18 hat jedoch den Vorteil, dass das Abgas sich noch auf einem hohen Druckniveau befindet, sodass mit dem Verdichter 26 weniger Verdichtungsleistung erbracht werden muss, um ein gewünschtes Druckniveau des Abgases zu erreichen. Mittels des zweiten Wärmetauschers 32 wird dem Abgas Wärme entzogen, um den zweiten Dampferzeuger 33 zu betreiben. Somit wird die Temperatur des Abgases gesenkt, bevor es in den Verdichter 26 eintritt. Auf diese Weise wird zum einen die thermische Belastung des Verdichters 26 reduziert, zum anderen ist eine niedrigere Abgastemperatur vorteilhaft, da auf diese Weise der Stickoxidanteil in den Abgasen der Brennkraftmaschine 1 weiter reduziert werden kann, da die Verbrennungstemperatur in den Zylindern 2 gesenkt wird. Demselben Zweck dienen im Übrigen der Ladeluftkühler 7 und der Zwischenkühler 12.

## Patentansprüche

1. Brennkraftmaschine (1) mit einer Abgasrückführungsvorrichtung (23) zur Rückführung von Abgas der Brennkraftmaschine (1) auf eine Frischluftseite (4) der Brennkraftmaschine (1), wobei die Abgasrückführungsvorrichtung (23) mindestens einen Verdichter (26) zur Komprimierung des der Frischluftseite (4) der Brennkraftmaschine (1) zugeführten Abgases aufweist, wobei zum Betrieb des Verdichters (26) dem Abgas entnommene thermische Energie vorgesehen ist, **dadurch gekennzeichnet, dass** zur Entnahme der thermischen Energie ein Wärmetauscher (30, 32) vorgesehen ist.

2. Brennkraftmaschine nach Anspruch 1, **dadurch gekennzeichnet, dass** der Wärmetauscher (30, 32) an einen Dampferzeuger (31, 33) zur Verdampfung eines Fluids angeschlossen und der erzeugte Dampf einer mit dem Verdichter (26) wirkverbundenen Turbine (27) zugeführt ist.

3. Brennkraftmaschine nach einem der vorhergehenden Ansprüche, **dadurch gekennzeichnet, dass** der Verdichter (26) stromabwärts oder stromaufwärts mindestens eines Abgaskühlers (38) angeordnet ist.

4. Brennkraftmaschine nach Anspruch 3, **dadurch gekennzeichnet, dass** der Wärmetauscher (30, 32) den Abgaskühler (38) zumindest teilweise bildet oder dass der Abgaskühler (38) ein weiterer, an den Dampferzeuger (31, 33) angeschlossener Wärmetauscher (30, 32) ist.

5. Brennkraftmaschine nach einem der vorhergehenden Ansprüche, **gekennzeichnet durch** eine mindestens einstufige Aufladeeinrichtung (8), insbesondere einen Abgasturbolader (9).

6. Brennkraftmaschine nach Anspruch 5, **dadurch gekennzeichnet, dass** ein Abgasentnahmeanschluss (24) zur Entnahme des der Brennkraftmaschine (1) zugeführten Abgases stromaufwärts oder stromabwärts des Abgasturboladers (9) angeordnet ist.

7. Brennkraftmaschine nach Anspruch 5 oder 6, **dadurch gekennzeichnet, dass** bei einem mehrstufigen Abgasturbolader (9) der Abgasentnahmeanschluss (24) zwischen den Stufen (10, 11) vorgesehen ist.

8. Brennkraftmaschine nach einem der Ansprüche 2 bis 7, **dadurch gekennzeichnet, dass** stromabwärts der Turbine (27) ein Kondensator (36) und/oder eine Fluidfördereinrichtung (29) vorgesehen ist.

## Claims

1. Internal combustion engine (1) having an exhaust-gas recirculation apparatus (23) for the recirculation of exhaust gas of the internal combustion engine (1) to a fresh-air side (4) of the internal combustion engine (1), wherein the exhaust-gas recirculation apparatus (23) has at least one compressor (26) for compressing the exhaust gas supplied to the fresh-air side (4) of the internal combustion engine (1), wherein thermal energy extracted from the exhaust gas is provided for operating the compressor (26), **characterized in that** a heat exchanger (30, 32) is provided for the extraction of the thermal energy.

2. Internal combustion engine according to Claim 1, **characterized in that** the heat exchanger (30, 32) is connected to a steam generator (31, 33) for evaporation of a fluid, and the steam that is generated is supplied to a turbine (27) which is operatively connected to the compressor (26).

3. Internal combustion engine according to one of the preceding claims, **characterized in that** the compressor (26) is arranged downstream or upstream of at least one exhaust-gas cooler (38).

4. Internal combustion engine according to Claim 3, **characterized in that** the heat exchanger (30, 32) at least partially forms the exhaust-gas cooler (38), or **in that** the exhaust-gas cooler (38) is a further heat exchanger (30, 32) which is connected to the steam generator (31, 33).

5. Internal combustion engine according to one of the preceding claims, **characterized by** an at least single-stage supercharging device (8), in particular an exhaust-gas turbocharger (9).

6. Internal combustion engine according to Claim 5, **characterized in that** an exhaust-gas extraction port (24) for the extraction of the exhaust gas supplied to the internal combustion engine (1) is arranged upstream or downstream of the exhaust-gas turbocharger (9).

7. Internal combustion engine according to Claim 5 or 6, **characterized in that**, in the case of a multi-stage exhaust-gas turbocharger (9), the exhaust-gas extraction port (24) is provided between the stages (10, 11).

8. Internal combustion engine according to one of Claims 2 to 7, **characterized in that** a condenser (36) and/or a fluid delivery device (29) are/is provided downstream of the turbine (27).

## Revendications

1. Moteur à combustion interne (1) comprenant un dispositif de recirculation des gaz d'échappement (23) pour faire recirculer des gaz d'échappement du moteur à combustion interne (1) d'un côté d'air frais (4) du moteur à combustion interne (1), le dispositif de recirculation des gaz d'échappement (23) présentant au moins un compresseur (26) pour comprimer le gaz d'échappement acheminé au côté d'air frais (4) du moteur à combustion interne (1), de l'énergie thermique prélevée du gaz d'échappement étant prévue pour faire fonctionner le compresseur (26), **caractérisé en ce qu'**il est prévu un échangeur de chaleur (30, 32) pour prélever l'énergie thermique.

2. Moteur à combustion interne selon la revendication 1, **caractérisé en ce que** l'échangeur de chaleur (30, 32) est raccordé à un générateur de vapeur (31, 33) pour la vaporisation d'un fluide et la vapeur produite est acheminée à une turbine (27) en liaison fonctionnelle avec le compresseur (26).

3. Moteur à combustion interne selon l'une quelconque des revendications précédentes, **caractérisé en ce que** le compresseur (26) est disposé en aval ou en amont d'au moins un refroidisseur de gaz d'échappement (38).

4. Moteur à combustion interne selon la revendication 3, **caractérisé en ce que** l'échangeur de chaleur (30, 32) forme au moins en partie le refroidisseur de gaz d'échappement (38) ou **en ce que** le refroidisseur de gaz d'échappement (38) est un échangeur de chaleur supplémentaire (30, 32) raccordé au générateur de vapeur (31, 33).

5. Moteur à combustion interne selon l'une quelconque des revendications précédentes, **caractérisé par** un dispositif de suralimentation (8) au moins à un étage, en particulier un turbocompresseur à gaz d'échappement (9).

6. Moteur à combustion interne selon la revendication 5, **caractérisé en ce qu'**un raccord de prélèvement de gaz d'échappement (24) pour prélever le gaz d'échappement acheminé au moteur à combustion interne (1) est disposé en amont ou en aval du turbocompresseur à gaz d'échappement (9).

7. Moteur à combustion interne selon la revendication 5 ou 6, **caractérisé en ce que** le raccord de prélèvement de gaz d'échappement (24), dans le cas d'un turbocompresseur à gaz d'échappement à plusieurs étages (9), est prévu entre les étages (10, 11).

8. Moteur à combustion interne selon l'une quelconque des revendications 2 à 7, **caractérisé en ce qu'**en aval de la turbine (27) est prévu un condenseur (36) et/ou un dispositif de transport de fluide (29).
